# EUROPEAN PATENT APPLICATION

(11) **EP 4 439 999 A1**
(43) Date of publication of application: **02.10.2024**
(21) Application number: 21843752.3
(22) Date of filing: 24.11.2021
(51) Int. Cl.: H04B 7/185

(54) **METHOD OF ASYNCHRONOUS DATA COMMUNICATION AND REGISTRATION OF A USER EQUIPMENT**

(71) Applicant: SATELIO IOT SERVICES, S.L., 08029 Barcelona (ES)
(72) Inventor: CALVERAS AUGÉ, Ana María, 08024 Barcelona (ES); RIGAZZI, Giovanni, 08012 Barcelona (ES); KELLERMANN, Timo, 08012 Barcelona (ES); CAMPS MUR, Daniel, 08340 Barcelona (ES); GUADALUPI, Marco, 08018 Barcelona (ES); SANPERA IZOARD, Jaume, 08014 Barcelona (ES)
(74) Representative: Isern Patentes y Marcas S.L.
(86) International application number: PCT/ES2021/070847
(87) International publication number: WO 2023/094715

(57) **Abstract**

The present invention is aimed at a method and a system of asynchronous data communication and a method for registering the user equipment in the mobile communication network, and more specifically to a method that enables bidirectional data transmission between a user equipment, a constellation of satellites and a terrestrial station connected to a nucleus or core of a mobile communication network when the user equipment and/or the terrestrial station are not simultaneously visible to at least one satellite of the constellation.

## Description

### Technical field of the invention

The present invention is aimed at a method and a system of asynchronous data communication, and more specifically to a method that enables bidirectional data transmission between a user equipment, a constellation of satellites and a terrestrial network with a terrestrial station connected to a mobile communication network when the user equipment and/or the terrestrial station are not simultaneously visible to at least one satellite of the constellation; furthermore, the invention provides a method for registering the user equipment in the mobile communication network.

### Background of the invention

At present, there are more and more devices connected to the Internet by means of the mobile phone network, and the progressive implementation of the 5G network is facilitating the access not only of the latest generation smartphones to the network, but also other electronic devices, in particular for outdoor use, in what is known as the Internet of Things (IoT).

However, the 3GPP network, which is the set of standards that regulates the mobile phone network to which the 5G protocol belongs, does not have global coverage, and is even very insufficient in some places, so as an alternative to expansion of the network by means of a conventional structure, the use of satellites in orbit that enable a connection to be established between a user equipment (UE), and a ground station or segment connected to the network has been proposed.

Currently, 3GPP experts are working on a version of the 5G protocol that integrates satellite networks for both broadband connections and Internet of Things connections, and that is known as *Release 17*, or Rel 17 specification. Network architectures had been previously proposed wherein the satellites included a radio station to decode the messages from the user terminals and transmit them to the network core, present in the ground segment. This considerably complex architecture has not yet been developed and the current version of the Rel 17 specification does not contemplate it; this network architecture is known as regenerative.

For its part, the 3GPP Rel 17 specification focusses on standardising an architecture that can operate in transparent mode, wherein the satellite simply acts as a repeater, or mirror, for communications from a terminal on the ground and a radio station located in the ground segment and directly connected to the network core. As of today, 3GPP assumes that there is a continuous connection between the user equipment, and the 3GPP network core that is located on the ground segment.

At present, providing a continuous connection between the user equipment and the ground segment from any satellite, transparent or regenerative, requires limiting the operation of the service to regions of the earth where the satellite has both coverage of the user terminal, or user equipment, and the ground station.

In the case of working with low-orbit satellites, it is necessary to deploy a dense constellation of satellites with a connection between each of them to create a mesh, so that when one of the satellites does not have coverage with a ground station, it can transmit data to other satellites until reaching one that has coverage with the ground station. In the case of working with low orbit satellites without a mesh connection as in the previous case, it will be necessary to create a hierarchical network architecture wherein a satellite in a given orbit transmits the data to a more distant satellite in a geostationary position, and use it as a repeater to reach a ground station that is fixed with respect to the position of the satellite in geostationary orbit.

All the above proposals are either restrictive in terms of service provision, or have an extremely high cost.

Therefore, a solution is required to the above problems currently presented by the 3GPP architecture for low-density satellite networks for the Internet of Things service.

### Description of the invention

The present invention makes it possible to overcome the shortcomings of the state of the art by means of an asynchronous communication method for a communication system made up of a constellation of satellites, a ground network with at least one ground station or segment connected to a core of a mobile communication network, and at least one user equipment or terminal; in turn, the communication system is in communication with a mobile communication network. The asynchronous communication method is complemented by an asynchronous registration method of a user equipment in the mobile communication network.

In a first inventive aspect, the invention provides an *asynchronous communication method of a communication system, comprising:*
*a constellation of communication satellites, with at least one satellite,*
*a ground network, comprising a ground station arranged on the earth's surface and a network core, wherein the ground network is configured to establish and control a communication with the constellation and with a mobile communication network comprising a core of a mobile communication network,*
a *user equipment, located on the earth's surface and configured to communicate with the ground network through the constellation, wherein*
*the user equipment is registered in the mobile communication network,*
*wherein the method comprises the steps of:*
*when the user equipment has connectivity with the constellation, sending, by the user equipment, a data set to the constellation, storing, by the constellation, the data set; and*
*when the constellation has connectivity with the ground station of the ground network,*
*sending, by the constellation, the data set to the core of the ground network.*

Throughout this document it should be understood that communication is asynchronously established by means of radio frequency between one or more user equipment and a ground station through at least one satellite. Preferably, the user equipment, previously registered in the communication network, will be located on the Earth's surface and in a position relatively distant with respect to a terrestrial station of a terrestrial communication network, for example, several thousand kilometres away, while the constellation of communication satellites will be orbiting the earth in non-geostationary orbit. Thus, the trajectory of each satellite will periodically pass through at least one point of the orbit that is visible from the user equipment or from the ground station. Having connectivity or being visible should be understood as the relative position between a device and the satellite in orbit such that the earth's curvature enables the direct transmission by means of radio frequency, or in other words, when the satellite has connectivity, either with a user equipment, or with a ground station; for example, from the relative point of view of the ground station, the satellite will have connectivity with the station when it is above the horizon. Occasionally, the user equipment and the ground station will be simultaneously visible to the satellite, although the method object of the invention will be more useful when this period of simultaneous connectivity is short or null.

In this way, communication is considered asynchronous, or discontinuous, due to the Earth's curvature and the position of the different elements of the system, a data set or packet transmitted by an emitting element, either the user equipment, or the ground network, cannot reach the receiver without experiencing a latency period until the satellite is visible to said receiver. For this purpose, the satellites of the constellation, the user equipment and the ground station(s) comprise data storage means that allow storing the information, the data set, until at least the moment when the receiver is visible; in a preferred example, the data storage means are conventional memory units.

In a preferred embodiment, the method is adapted to the use of a communication protocol defined for terrestrial networks known as 3GPP 5G NB-IoT, standardised by the 3GPP organisation, responsible for 2G, 3G, 4G and 5G mobile telephone standards; a characteristic of these standards is that they are designed and adapted for use in terrestrial telephone networks, where all the elements of the network are interconnected between them up to a management point known as the *core* of the network (also *EPC*)*.*

Preferably, the user equipment will be a device with IoT capability and compatibility with the 5G standard mobile telephone network, normally comprising a radio transmitter configured to establish bidirectional communication by means of radio frequency with the satellites of the constellation. Ground network or terrestrial network is to be understood as a communication network that comprises at least one terrestrial station, ground station, or ground segment, which should be understood as a link equipment between the constellation of satellites and the core of a mobile communication network, comprising at least one authentication server, for example, with the 5G architecture mobile telephone network. In one embodiment, the ground network comprises a plurality of ground stations distributed over the earth's surface, such that connectivity with the constellation enables a transmission latency in the order of minutes or seconds.

Preferably, the communication system is adapted to the 3GPP 5G NB IoT standard, and in this regard, each satellite of the constellation comprises a base communication node that enables the direct communication between a user equipment and the satellite, as well as the processing of the communication flow. Thus, the satellites of the constellation operate as in a regenerative architecture, and are not limited to redirecting the information transmitted by the user equipment to the ground station, but participate in the transmission process.

The user equipment, also preferably, are loT-type devices able to communicate through 5G standard wireless communication networks; each of these user equipment is configured to transmit information, specific to each equipment, to a destination server, through a larger communication network, preferably the Internet.

Information transmission is achieved through communication with the ground network, which in turn is in communication with the core of the mobile communication network; the terrestrial station is a conventional ground station or segment for the constellation of satellites, which is adapted to issue and receive 3GPP 5G NB IoT standard transmissions, for example, with modules to operate with the 3GPP 5G NB IoT standard in asynchronous mode between the user equipment and the core of the mobile communication network.

Each of the satellites in the constellation can be a conventional communication satellite, with a base communication node that enables the communication between the satellite and the user equipment, preferably operating with 3GPP 5G NB IoT standards, and between the satellite and the ground station, the satellite further comprising the required modules to enable bidirectional communication and asynchronous registration to the mobile communication network. Advantageously, the constellation of satellites comprises a few units, of the order of three or four satellites that describe a non-geostationary orbit around the Earth, and in particular a low orbit; in this way, the potential of the present invention can be fully exploited, since on the one hand the manufacturing and maintenance costs of a large constellation are reduced, and on the other hand, the costs and complexity of putting into orbit one or more satellites in a high or geostationary orbit are not incurred.

Advantageously, this invention enables a low-density constellation of satellites in continuous movement to provide Internet connectivity to devices that need to send or receive data from certain applications anywhere on the planet without having a continuous connection between the user equipment and the core of the mobile communication network located on the ground through the constellation of satellites and the ground station.

In a particular embodiment, *the method further comprises the step of: transmitting, by the ground network, the data set to the core of the mobile communication network.*

Advantageously, after achieving the asynchronous transmission of the data set from the user equipment and the ground network, the ground network transmits said data set to the core of the mobile communication network, for example to another user equipment or terminal connected to the core of the mobile communication network in a conventional manner. Data set should be understood as the information to be transmitted from or to the user equipment, or transmission load, such as IP network protocol data packets. In a particular embodiment, the user equipment is also adapted to be connected to the mobile communication network in a conventional manner.

In a particular embodiment, *the constellation comprises a first satellite and a second satellite in non-geostationary orbit, when the first satellite has received and stored the data set from the user equipment, and when the first satellite has connectivity with the second satellite, the method comprises the steps of: sending, by the first satellite, the data set to the second satellite.*

Advantageously, the constellation comprises a plurality of satellites in non-geostationary orbit, which means that the period without connectivity between the user equipment or the ground network and at least one satellite of the constellation is shorter such that the transmission periods are shorter to the extent that the constellation has more satellites; in addition, each satellite is configured to establish communication with another satellite of the constellation, which enables the dissemination of data from one satellite to another, further reducing transmission periods. Advantageously, a data set consisting of a plurality of packets can be transmitted by means of several different satellites of the same constellation, so that the latency of the transmission is reduced; preferably, for the transmission of data packets, the satellites operate in transparent mode, and are limited to storing and redirecting the data packets to the ground station. In a particular embodiment, the constellation further comprises additional satellites, wherein the method comprises the step of sending, by the first or second satellite, the data set to another satellite.

In a particular embodiment, the method further comprises, *when the second satellite has connectivity with the ground station of the ground network, the step of: sending, by the second satellite, the data set to the ground network.*

Circumstantially, a second satellite that has received the data set can have connectivity with the ground station before the first satellite, so it can transmit the data set before the first satellite and make communication faster; in this case, when the first satellite has connectivity with the ground station and in turn transmits the data set, the ground network can simply discard this duplicate data.

In a second inventive aspect, the invention provides *an asynchronous communication method of a communication system, comprising:*
*a constellation of communication satellites, with at least one satellite,*
*a ground network, comprising a ground station arranged on the earth's surface and a network core, wherein the ground network is configured to establish and control a communication with the constellation and with a mobile communication network comprising a core of a mobile communication network,*
*a user equipment, located on the earth's surface and configured to communicate with the ground network through the constellation, wherein the user equipment is registered in the mobile communication network,*
*wherein the method comprises the steps of:*
*when the constellation has connectivity with the ground station of the ground network,*
*receiving, by the constellation, a data set from the core of the mobile communication network through the ground network; storing the data set by the constellation; and*
*when the constellation has connectivity with the user equipment,*
*sending, by the constellation, the data set to the user equipment.*

Advantageously, the method of the second inventive aspect provides a solution for the transmission of data from the communication network to the user equipment, completing a bidirectional communication.

In a particular embodiment, *the method further comprises the step of: receiving, by the ground network, the data set from the core of the mobile communication network.*

In a particular embodiment, *the constellation comprises a first satellite and a second satellite in non-geostationary orbit, when the first satellite has received and stored the data set from the ground network, and when the first satellite has connectivity with the second satellite, the method comprises the steps of: sending, by the first satellite, the data set to the second satellite.*

In a particular embodiment, the constellation further comprises additional satellites, wherein the method comprises the step of sending, by the first or second satellite, the data set to another satellite.

In a particular embodiment, the method further comprises, *when the second satellite has connectivity with the user equipment, the step of: sending, by the second satellite, the data set to the user equipment.*

In a third inventive aspect, the invention provides an *asynchronous registration method of a user equipment in a mobile communication network by means of a communication system, wherein the communication system comprises:*
*a constellation of communication satellites, with at least one satellite,*
*a ground network, comprising a ground station arranged on the earth's surface and configured to establish and control communication with the constellation and with a mobile communication network comprising a core of a mobile communication network,*
*a user equipment, located on the earth's surface and configured to communicate with the ground network through the constellation,*

*wherein the method comprises the steps of:*
   *sending, by the user equipment, a registration request, comprising an identifier of the user equipment, to the constellation,*
   *storing, by the constellation, the identifier of the user equipment,*
   *sending, by the constellation, a provisional authentication request rejection message to the user equipment; and*
*when the constellation has connectivity with the ground station of the ground network,*
   *sending, by the constellation, an authentication information request generated with the identifier of the user equipment to the core of the mobile communication network through the ground network.*

The proposed registration method enables the authentication process of a user equipment with respect to an authentication server of the mobile communication network, which is accessed through the ground network. According to the proposed method, during the period in which a satellite of the constellation is visible with respect to the user equipment, the satellite receives a user identifier that enables the authentication to be completed with the authentication server; in a conventional authentication process, the identifier would be transmitted to the authentication server, however, in the proposed method the transmission of the identifier is not possible while a ground station of the ground network, which gives access to the authentication server of the mobile communication network, does not have connectivity with the constellation. Instead, the satellite stores the identifier and issues a provisional authentication rejection message, unlike the error message that the user equipment would receive in a conventional method; in other examples, the provisional rejection message is a conventional message of another type that is interpreted by the user equipment as a provisional rejection message. In the event that the authentication information of the user terminal is already stored in the satellite, the authentication is completed.

In a particular embodiment, the method further comprises *the step of: authenticating, by the core of the mobile communication network, the user equipment.*

In a particular embodiment, *when the authentication of the user equipment is valid, the method comprises the step of: sending, by the core of the mobile communication network through the ground network, an authentication vector of the user equipment to the constellation.*

In a particular embodiment, *the constellation comprises a first satellite and a second satellite in non-geostationary orbit, wherein the method comprises, by the first satellite, when the user equipment has connectivity with the first satellite, the steps of:*
*receiving the registration request with the identifier of the user equipment, storing the identifier of the user equipment,*
*sending the user equipment a provisional authentication rejection* message.

In a particular embodiment, *the method further comprises, by the first satellite, when the ground station of the ground network has connectivity with the first satellite, the step of: sending an authentication information request that is generated with the identifier of the user equipment to the core of the mobile communication network through the ground network.*

In a particular embodiment, *the method further comprises, by the first satellite, when the user equipment has connectivity with the first satellite, the steps of:*
*receiving a connection request from the user equipment,*
*verifying if there is an authentication vector for the identifier of the user equipment,*
*sending the updated location answer to the user equipment.*

Advantageously, with the step of sending the updated location answer to the user equipment, the method of user registration to the mobile network is completed.

In a particular embodiment, *the method further comprises, by the first satellite, when the ground station of the ground network has connectivity with the first satellite, the steps of:*
*receiving an authentication vector and an updated location answer for the user equipment from the core of the mobile communication network through the ground network,*
*storing the authentication vector, and the updated location answer.*

In a particular embodiment, *the method also comprises, by the second satellite, when the ground station of the ground network has connectivity with the second satellite, the steps of:*
*receiving an authentication vector and an updated location answer for the user equipment from the core of the mobile communication network*
*through the ground network,*
*storing the authentication vector, and the updated location answer.*

In a particular embodiment, *the method further comprises, by the second satellite, when the user equipment has connectivity with the second satellite, the steps of:*
*receiving a connection request from the user equipment,*
*verifying if there is an authentication vector for the identifier of the user equipment,*
*sending the updated location answer to the user equipment.*

When the second satellite, that is, the satellite that has received the authentication vector, AV, and the updated location answer, ULA, becomes visible to the user equipment, the satellite exchanges data with the user equipment, and in this manner, completes the authentication of the user equipment. Once the authentication has been asynchronously completed, the user equipment can send data packets to a communication network, for example, the Internet, through the ground station according to the method of the first and/or second inventive aspects.

In a particular embodiment, *the ground network is in data connection with an authentication server of the core of the mobile communication network, wherein the method comprises, when the constellation has connectivity with the ground station of the ground network, by the ground network, the steps of:*
*receiving an authentication information request from the constellation,*
*sending the authentication information request to the authentication server, receiving an authentication vector from the authentication server, for the identifier of the user equipment,*
*storing the authentication vector,*
*sending an updated location request to the authentication server,*
*receiving an updated location answer from the authentication server,*
*sending the authentication vector and the updated location answer to the constellation.*

From the point of view of the ground network, the authentication process of the user equipment begins with the initiation of connectivity between the ground station and the first satellite and the receipt of the authentication information request, AIR, for the user equipment identified by means of the identifier thereof, which in a preferred embodiment is an IMSI identifier. The terrestrial network then sends the authentication information request, AIR and an updated location request, ULR, to the authentication server, which processes the request and generates the authentication vector, AV, and the updated location answer, ULA; subsequently, the authentication vector, AV, and the updated location answer, ULA, are stored in the terrestrial network until the second satellite becomes visible, which may in fact be the same satellite that has transmitted the authentication information request, AIR, and then proceeds to the transmission thereof.

Once the ground station is visible with respect to the satellite, the latter issues an authentication request, AIR, to the ground station, for the user equipment, unique for each individual user equipment. For its part, the ground network, after receiving the AIR, will establish contact with the authentication server, which in the case in which the authentication is valid, will issue an authentication vector, AV. This vector will be transmitted to the satellite along with an updated location answer, ULA, from the user equipment.

Both the authentication vector, AV, and the updated location answer, ULA, are stored in the ground network, and the ground station transmits them to the satellite which, according to the trajectory thereof, first becomes visible to the user equipment; for clarity, this satellite is called the second satellite, but it may, in fact, be the same satellite that has transmitted the authentication information request, AIR.

In a particular embodiment, *the constellation comprises a first satellite and a second satellite in non-geostationary orbit, wherein the method further comprises the step of:*
*generating, by the first satellite, a context of a user equipment based on*
*the identifier and the authentication vector of the user equipment.*

Context should be understood as a data structure that comprises a set of attributes of the user equipment registered in the operator's network that enables it to be uniquely identified, and that advantageously enables data transmission between the satellite and the user equipment without the need to be authenticated again.

In a particular embodiment, *the method further comprises the steps of:*
*sending, by the first satellite, the context to the ground station,*
*sending, by the ground station, the context to the second satellite.*

Advantageously, this embodiment of the method enables the context between the satellites of the constellation to be disseminated, so that the user equipment can communicate with any of them.

In a particular embodiment, *when the first satellite has connectivity with the second satellite, the method further comprises the step of:*
*sending, by the first satellite, the context of the user equipment to the second satellite.*

Advantageously, this step enables the dissemination of the context from satellite to satellite without the need to go through the ground station.

These and other features and advantages of the invention will be apparent from the description of the preferred, but not exclusive, embodiments, which are illustrated by way of non-limiting example in the accompanying drawings.

### Brief description of the drawings

Figures 1a-1d show a sequence of the information flow, as well as the elements of the transmission system.
Figure 2 shows a diagram of the authentication process by the system.

### Detailed description of an exemplary embodiment

Numerous specific details are set forth in the following detailed description in the form of examples to provide a thorough understanding of the relevant teachings. However, it will be apparent to those skilled in the art that the present teachings can be practiced without such details.

The present invention enables a wireless communication between one or more user equipment and a communication network by means of a low-density constellation of satellites that do not have simultaneous connectivity with the user equipment and with the ground network (GN).

In a preferred embodiment of the invention, the communication system comprises a plurality of user equipment (UE), which in the example are consumer electronics for outdoor use or similar devices, with an "Internet of things" (IoT) configuration, that is, with electronic sensors or equipment capable of collecting information and transmitting it over the Internet, for example, to a web server of the service provider of the user equipment (UE) for further processing thereof; the system also comprises a constellation of satellites in non-geostationary orbit, which for simplicity in the example described consists of only two satellites (SAT1, SAT2) with a radio frequency communication base node for managing 3GPP 5G IoT standard communication and a conventional satellite communication link; each of the satellites has a computer configured at least to process the signals from the pieces of user equipment (UE) and from the ground network (GN). This ground network (GN) is a communication network which for simplicity in the example described comprises a conventional ground station or segment adapted to operate according to the 3GPP 5G IoT standard, as well as to establish data communication with a mobile communication network, for example, with the 5G mobile network; the connection between the core of the ground network and the core of the mobile communication network can be made by means of conventional wiring, in particular to connect with an authentication server (HSS) and with the Internet; in this manner, the data packets generated by a user equipment (UE) are transmitted from the user equipment (UE) to the constellation of satellites, from the latter to the ground network (GN), and from the ground network (GN) to the destination location thereof, for example through the Internet to a web server of a service provider.

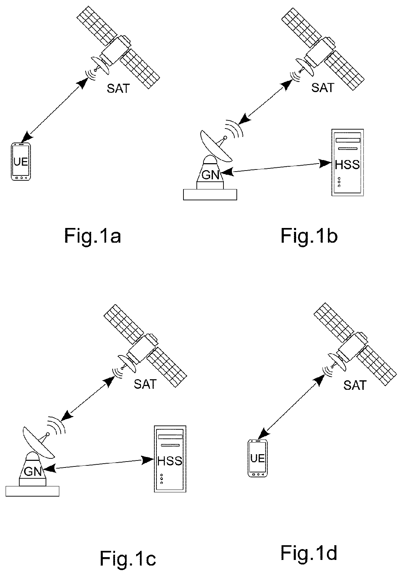

For this, a user equipment (UE) must first register, or authenticate, with an authentication server (HSS); the process is schematically shown in the steps of Figures 1a-1d, wherein it is shown how, in a first step, the user equipment (UE) issues an authentication request and sends the corresponding identifier (ID) thereof to the first satellite (SAT1), when this is visible.

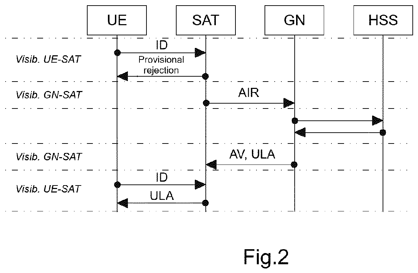

As the method stipulates, and Figure 2 shows, when the user equipment (UE) has visibility with the first satellite (SAT1), the first satellite (SAT1) receives the identifier (ID), which in the example described is an IMSI identifier, and verifies if there is an authentication vector, AV, for the IMSI identifier (ID). Given that at this time the first satellite (SAT1) cannot establish direct communication with the authentication server (HSS), since the ground station of the ground network (GN) is not visible, the first satellite (SAT1) issues a provisional rejection message that leaves the user equipment (UE) on standby, i.e., it blocks the repetition of the authentication request as it would occur with an error message in a conventional method; furthermore, the first satellite (SAT1) stores the authentication information request, AIR, and the IMSI identifier (ID) in the internal memory until the moment when the ground network (GN) becomes visible to the first satellite (SAT1), as shown in Figures 1b and 1c and in Figure 2.

When the first satellite (SAT1) and the ground station of the ground network (GN) have visibility, the first satellite (SAT1) sends the authentication information request, AIR, generated with the identifier of the user equipment (ID) IMSI, the ground network (GN) receives them, and generates, if the authentication has been validated by the authentication server (HSS), an authentication vector, AV, for the identifier (ID) of the user equipment (UE), and an updated location answer, ULA. The core of the ground network (GN) then stores this information at least until the second satellite (SAT2) becomes visible, and then the ground station of the ground network (GN) sends the authentication vector, AV, and the updated location answer, ULA, to the second satellite (SAT2), or the first satellite (SAT1) if still visible.

Finally, to complete the authentication, it only remains to allow the authentication to the user equipment (UE), as shown in Figure 1d and in Figure 2, wherein the first satellite (SAT1) or the second satellite (SAT2) would already have received the authentication vector, AV, and the updated location answer, ULA, would have stored them, and when the user equipment (UE) is visible and receives a connection request from the user equipment (UE), the first satellite (SAT1) or the second satellite (SAT2) verifies the existence of the credentials for the requesting user equipment (UE) and sends the updated location answer, ULA, to the user equipment (UE), so that the user equipment (UE) is authenticated and can initiate the transmission of data packets.

For the user equipment (UE) to establish communication with any of the satellites (SAT1, SAT2), once registered, the first satellite (SAT1) generates a context of the user equipment (UE) and disseminates it to the rest of the constellation (SAT); in one example, the first satellite (SAT1) transmits the context to the ground network (GN), and the ground network (GN) transmits it to the second satellite (SAT2), to the extent that the elements involved have connectivity; in another example, the first satellite (SAT1) transmits the context directly to the second satellite (SAT2).

Once the user equipment (UE) has been registered, a bidirectional communication with the mobile communication network can be performed asynchronously. For a transmission from the user equipment (UE), or *uplink,* the user equipment (UE) transmits one or more data packets to the first satellite of the constellation that has connectivity, which we will conveniently call the first satellite (SAT1); in one example, the first satellite (SAT1) will store the data packets internally, and as soon as it passes through a point of the trajectory thereof with connectivity with the ground station of the ground network (GN) it will transmit the data packets to the ground station of the ground network (GN); finally, the core of the ground network (GN) will transmit the data packets to the core of the mobile communication network, wherein it will continue its transmission in a conventional manner to a receiving device, for example another user equipment or a server of a service provider.

Alternatively, in another example the first satellite (SAT1) has connectivity with the second satellite (SAT2), and transmits the data packets thereto; in this manner, both satellites will transmit the data set to the ground station of the ground network (GN), so that the latency of the transmission is reduced as much as possible.

For a transmission from the communication network to the user equipment (UE), or *downlink,* the data packet(s) are delivered on the ground network (GS), which in turn transmits them to the first satellite (SAT1) that has connectivity. For its part, the first satellite (SAT1) will send the data set to the user equipment (UE) as soon as it has connectivity. When a second satellite (SAT2) intervenes, the process is analogous to that described in the event of *uplink.*

## Claims

1. An asynchronous communication method of a communication system, comprising:
a constellation (SAT) of communication satellites, with at least one satellite,
a ground network (GN), comprising a ground station arranged on the earth's surface and a network core, wherein the ground network (GN) is configured to establish and control communication with the constellation (SAT) and with a mobile communication network comprising a core of a mobile communication network,
a user equipment (UE), located on the earth's surface and configured to communicate with the ground network (GN) through the constellation (SAT), wherein the user equipment (UE) is registered in the mobile communication network,
wherein the method comprises the steps of:
when the user equipment (UE) has connectivity with the constellation (SAT), sending, by the user equipment (UE), a data set to the constellation (SAT), storing, by the constellation (SAT), the data set; and
when the constellation (SAT) has connectivity with the ground station of the ground network (GN),
sending, by the constellation (SAT), the data set to the core of the ground network (GN).

2. The method according to the preceding claim, further comprising the step of:
transmitting, by the ground network (GN), the data set to the core of the mobile communication network.

3. The method according to any of the preceding claims, wherein the constellation (SAT) comprises a first satellite (SAT1) and a second satellite (SAT2) in non-geostationary orbit, when the first satellite (SAT1) has received and stored the data set of the user equipment (UE), and when the first satellite (SAT1) has connectivity with the second satellite (SAT2), the method comprises the steps of:
sending, by the first satellite (SAT1) the data set to the second satellite (SAT2).

4. The method according to the preceding claim, which further comprises, when the second satellite (SAT2) has connectivity with the ground station of the ground network (GN), the step of:
sending, by the second satellite (SAT2), the data set to the ground network (GN).

5. An asynchronous communication method of a communication system, comprising:
a constellation (SAT) of communication satellites, with at least one satellite,
a ground network (GN), comprising a ground station arranged on the earth's surface and a network core, wherein the ground network (GN) is configured to establish and control communication with the constellation (SAT) and with a mobile communication network comprising a core of a mobile communication network,
a user equipment (UE), located on the earth's surface and configured to communicate with the ground network (GN) through the constellation (SAT), wherein the user equipment (UE) is registered in the mobile communication network,
wherein the method comprises the steps of:
when the constellation (SAT) has connectivity with the ground station of the ground network (GN),
receiving, by the constellation (SAT), a data set from the core of the mobile communication network through the ground network (GN);
storing, by the constellation (SAT) the data set; and
when the constellation (SAT) has connectivity with the user equipment (UE), sending, by the constellation (SAT), the data set to the user equipment (UE).

6. The method according to the preceding claim, further comprising the step of:
receiving, by the ground network (GN), the data set from the core of the mobile communication network.

7. The method according to any of claims 5-6, wherein the constellation (SAT) comprises a first satellite (SAT1) and a second satellite (SAT2) in non-geostationary orbit, when the first satellite (SAT1) has received and stored the data set from the ground network (GN), and when the first satellite (SAT1) has connectivity with the second satellite (SAT2), the method comprises the steps of:
sending, by the first satellite (SAT1) the data set to the second satellite (SAT2).

8. The method according to the preceding claim, further comprising, when the second satellite (SAT2) has connectivity with the user equipment (UE), the step of:
sending, by the second satellite (SAT2), the data set to the user equipment (UE).

9. An asynchronous registration method of a user equipment (UE) in a mobile communication network by means of a communication system, wherein the communication system comprises:
a constellation (SAT) of communication satellites, with at least one satellite,
a ground network (GN), comprising a ground station arranged on the earth's surface and a network core, wherein the ground network (GN) is configured to establish and control communication with the constellation (SAT) and with a mobile communication network comprising a core of a mobile communication network,
a user equipment (UE), located on the earth's surface and configured to communicate with the ground network (GN) through the constellation (SAT),
wherein the method comprises the steps of:
sending, by the user equipment (UE), a registration request, comprising an identifier (ID) of the user equipment (UE), to the constellation (SAT), storing, by the constellation (SAT), the identifier (ID) of the user equipment (UE),
sending, by the constellation (SAT), a provisional authentication request rejection message to the user equipment (UE); and
when the constellation (SAT) has connectivity with the ground station of the ground network (GN),
sending, by the constellation (SAT), an authentication information request (AIR) generated with the identifier (ID) of the user equipment (UE) to the core of the mobile communication network through the ground network (GN).

10. The method according to the preceding claim, wherein the method further comprises the step of:
authenticating, by the core of the mobile communication network, the user equipment (UE).

11. The method according to any of claims 9-10, wherein, when the authentication of the user equipment (UE) is valid, the method comprises the step of:
sending, by the core of the mobile communication network through the ground network (GN), an authentication vector (AV) from the user equipment (UE) to the constellation (SAT).

12. The method according to any of claims 9-11, wherein the constellation (SAT) comprises a first satellite (SAT1) and a second satellite (SAT2) in non-geostationary orbit, wherein the method comprises, by the first satellite (SAT1), when the user equipment (UE) has connectivity with the first satellite (SAT1), the steps of:
receiving the registration request with the identifier (ID) of the user equipment (UE),
storing the identifier (ID) of the user equipment (UE),
sending the user equipment (UE) a provisional authentication rejection message.

13. The method according to the preceding claim, wherein the method comprises, by the first satellite (SAT1), when the ground station of the ground network (GN) has connectivity with the first satellite (SAT1), the step of:
sending to the core of the mobile communication network through the ground network (GN) an authentication information request (AIR) generated with the identifier (ID) of the user equipment (UE).

14. The method according to the preceding claim, wherein the method comprises, by the first satellite (SAT1), when the user equipment (UE) has connectivity with the first satellite (SAT1), the steps of:
receiving a connection request from the user equipment (UE),
verifying if there is an authentication vector (AV) for the identifier of the user equipment (UE),
sending the updated location answer (ULA) to the user equipment (UE).

15. The method according to the preceding claim, wherein the method comprises, by the first satellite (SAT1), when the ground station of the ground network (GN) has connectivity with the first satellite (SAT1), the steps of:
receiving an authentication vector (AV) and an updated location answer (ULA) for the user equipment (UE) from the core of the mobile communication network through the ground network (GN),
storing the authentication vector (AV), and the updated location answer (ULA).

16. The method according to claim 13, wherein the method comprises, by the second satellite (SAT2), when the ground station of the ground network (GN) has connectivity with the second satellite (SAT2), the steps of:
receiving an authentication vector (AV) and an updated location answer (ULA) for the user equipment (UE) from the core of the mobile communication network through the ground network (GN),
storing the authentication vector (AV), and the updated location answer (ULA).

17. The method according to the preceding claim, wherein the method comprises, by the second satellite (SAT2), when the user equipment (UE) has connectivity with the second satellite (SAT2), the steps of:
receiving a connection request from the user equipment (UE),
verifying if there is an authentication vector (AV) for the identifier of the user equipment (UE),
sending the updated location answer (ULA) to the user equipment (UE).

18. The method according to any of claims 9-17, wherein the ground network (GN) is in data connection with an authentication server (HSS) of the core of the mobile communication network, wherein the method comprises, when the constellation (SAT) has connectivity with the ground station of the ground network (GN), by the ground network (GN), the steps of:
receiving an authentication information request (AIR) from the constellation (SAT),
sending the authentication information request (AIR) to the authentication server (HSS),
receiving an authentication vector (AV) from the authentication server (HSS), for the identifier (ID) of the user equipment (UE),
storing the authentication vector (AV),
sending an updated location request (ULR) to the authentication server (HSS),
receiving an updated location answer (ULA) from the authentication server (HSS),
sending the authentication vector (AV) and the updated location answer (ULA) to the constellation (SAT).

19. The method according to any of claims 9-18, wherein the constellation (SAT) comprises a first satellite (SAT1) and a second satellite (SAT2) in non-geostationary orbit, wherein the method further comprises the step of:
generating, by the first satellite (SAT1), a context of a user equipment (UE) from the identifier (ID) and the authentication vector (AV) of the user equipment (UE).

20. The method according to the preceding claim, wherein the method further comprises the steps of:
sending, by the first satellite (SAT1), the context to the ground network (GN),
sending, by the ground network (GN), the context to the second satellite (SAT2).

21. The method according to claim 19, wherein, when the first satellite (SAT1) has connectivity with the second satellite (SAT2), the method further comprises the step of:
sending, by the first satellite (SAT1) the context of the user equipment (UE) to the second satellite (SAT2).
